# EUROPEAN PATENT APPLICATION

(11) **EP 3 754 572 A1**
(43) Date of publication of application: **23.12.2020**
(21) Application number: 19751416.9
(22) Date of filing: 01.02.2019
(51) Int. Cl.: G06Q 10/06

(54) **BUSINESS EXECUTION SYSTEM AND METHOD THEREFOR**

(30) Priority: 12.02.2018 KR 20180016634
(71) Applicant: Yoon, Seong Min, Guri-si, Gyeonggi-do 11952 (KR)
(72) Inventor: Yoon, Seong Min, Guri-si, Gyeonggi-do 11952 (KR)
(74) Representative: Cabinet Chaillot
(86) International application number: PCT/KR2019/001427
(87) International publication number: WO 2019/156445

(57) **Abstract**

The present invention relates to a business execution system and a method thereof. The business execution system comprises: an operating computer; and a user program that is communicatively connected to the operating computer and is output or executed on at least one user terminal for engaging in business execution, wherein the operating computer provides at least one necessary viewing opinion per business item generated on the basis of expert opinion data through a collective intelligence convergence system, converges at least one participant's opinion on the required reading opinion to verify business items and business execution, and prevents abuse from experts by expert check means.

## Description

### BACKGROUND OF THE INVENTION

### Field of the Invention

The present invention relates to a business execution system and a method thereof. More particularly, the present invention is to minimize losses through optimized operation of investment funds and maximize profits through business execution. In the present invention, a business item corresponding to a preparation stage for a business execution is selected, and opinions of experts, investors, and consumers interested in the business item in the initial stage of the business of the selected business item are gradually staged. It is an invention for optimizing the investment input by separating into the required items and the selective items of investment funds required to evaluate the business items and execute the business based on these opinions.

### Description of the Related Art

It is common for the business execution to consist of the following factors.

In general, it is common for investments to be collected and profits generated through business execution through a series of processes such as selecting a business item, evaluating the feasibility of the selected business item, establishing a basic plan, and establishing an execution plan. However, there are many cases in which a desired business execution cannot be achieved due to problems such as decision making by a specific person or execution of a project through business feasibility through minimal expert participation in a series of processes for business execution. Inventions have been disclosed to solve this problem of business execution.

In Korean Patent Laid-Open No. 10-2001-0086605 (published on September 15, 2001), there is published a method of consulting about real estate development and method of developing real estate based on network.

The publication invention (1) comprising: receiving the development information for a specific real estate online from a real estate agent; generating the basic business feasibility analysis report for the real estate development information automatically through the basic business feasibility analysis program when the real estate development information is input; after the basic business feasibility analysis, automatically generating a basic architectural design drawing for the real estate development information through the architectural design basic drawing generation program; providing the basic business feasibility analysis report and the basic architectural design drawings to the affiliated experts; receiving the opinions of the experts and information on whether the property is suitable for development; generating a final basic business feasibility analysis report by combining the basic business feasibility analysis report and the architectural design basic drawing in the above statement; and providing the final basic business feasibility analysis report to the real estate agent or real estate owner.

In addition, in Korean Patent registration No. 10-1389145 (registered on April 18, 2014); there is published real estate development information intermediate method and system.

The patent invention (2) is an invention relating to a method and system for relaying real estate development information are provided to determine a target area for developing and a development type by the recommendation and participation of many development suggestion persons; to enable the development suggestion persons to optimally recommend, use, and deal a land; and to offer development information and services to landlords, development suggestion persons, and consumers on the basis of the location information of a real estate development supporting organization.

The patent invention comprising: Providing a map on a screen of a plurality of user terminals connected to the real estate development information relay system through a web server; receiving an appropriate development area and development use through the user terminal from a development proponent; selecting a region where the selected suitable development region and the number of proposals for development use are greater than or equal to a reference value, and establishing a community for development of the region of interest.

In addition, in Korean Patent registration No. 10-1259417(registered on April 24, 2013), there is published hybrid type method and system for extracting an emerging technologies using collective intelligence.

The patent invention (3) is an invention relating to a system comprising a quantitative hopeful technology extracting unit selects a database storing hopeful technology data and perform first and second clustering to the selected hopeful technology data in order to extract a first hopeful technology candidate group, a collective Intelligence hopeful technology extracting unit extracts a keyword from an article clicked by experts more than twenty times in a site providing technology trend information in order to extract issue technology of a keyword clicked more than forty times as a second hopeful technology candidate group, and a hopeful technology determining unit analyzes the similarity of the first and the second hopeful technology candidate groups to determine final hopeful technology.

The public invention (1) is an invention characterized by the automatic generation of basic business feasibility analysis reports on specific real estate development information through the first project feasibility analysis program and the provision of opinions by affiliated experts based on the above basic business feasibility analysis report.

The public invention (1) is the invention of the structure determined by the expert's view, which generates business feasibility information of real estate development by the program, and is a composition in which experts express their views based on the program. The patent invention (2) is the invention of a structure that determines the type of development and the area to be developed by the recommendation and participation of a number of development proposers.
The above patent invention (3) extracts the first group of promising technology candidates on a specific subject and the second group of promising technology candidates on a site that provides information on technology trends on a specific topic, extracts keywords from articles clicked by experts on the issue technology, and extracts the keyword issue technology with a higher number of clicks into the second group of promising technology candidates to determine the likelihood of the first and second promising technology candidates.

However, because these publication or patent inventions are focused only on the selection of items through fragmentary verification that relies on expert opinion or on the recommendation of development proposers, there are problems that cannot be solved for factors such as the provision of basic knowledge through verification of expert knowledge about business items, the provision of expert knowledge from various participants, and the investment required in the course of the business execution.

Therefore, it is necessary to provide knowledge information that includes expert verification of business items, expert background information, and the invention that can optimize the feasibility and investment of business items through converging opinions from various participants who have received expert knowledge about them.

### SUMMARY OF THE INVENTION

The purpose of this invention is to solve the problems of the above prior art, and the purpose of this invention is to provide the business execution system and its methods through the validation of the feasibility of carrying out the business item through the provision of knowledge information including expert verification and expert background knowledge, and by converging opinions from various participants who have received expert knowledge of the item.
The other purpose of this invention is to provide a business execution system and its methods for optimizing the investment in the business execution by separating the investment items into required and selective investment costs, extracting non-essential factors that can reduce costs from the selective investment costs, and reducing investment costs in this part.

According to a first aspect of the present invention, there is provided a business execution system comprising: an operating computer to manage the business execution by receiving and managing the expert knowledge and detailed description of the registered experts, and converging opinions presented by various participants referring to the expert knowledge and detailed description of the experts; a data storage unit that is included in the operating computer or is connected to the operating computer using a communication means to store information necessary for business execution or to provide it to the operating computer; at least one proposer terminal for accessing the operating computer using a communication means and suggesting a business item using a website provided by the operating computer or an application program installed and executed; at least one expert terminal for accessing the operating computer using a communication means and providing the operating computer with the expert knowledge and background knowledge on business items using a website provided by the operating computer or an application program installed and executed; at least one participant terminal for accessing the operating computer using a communication means and providing the operating computer with opinions after reading the expert knowledge and background knowledge on business items using a website provided by the operating computer or an application program installed and executed; at least one service provider terminal for accessing the operating computer using a communication means and providing the operating computer with an executing information of the business items and progress information, etc. to the operating computer during business execution using a website provided by the operating computer or an application program installed and executed; an intelligent computer that is communicatively connected to the operating computer and provides the operating computer with intelligent information about business items and legacy information required to business execution; an external institution computer that is connected to the operating computer to provide information that guarantees publicity of business items.

According to a second aspect of the present invention, there is provided a business execution method comprising: providing, by the proposer terminal, information of business item to the operating computer using a communication means; checking, the operating computer, whether the business item meets a set criteria; providing, by the operating computer, the information of business item to at least one expert terminal so that at least one inquired expert among registered experts can check when the business item meets the set criteria; providing, by the at least one expert terminal, expert opinion data including whether or not to agree to a business execution with respect to the business item, scores, expert knowledge, and the detailed description thereof; confirming, the operating computer, whether the business item meets a set criteria based on expert opinion data received; generating, by the operating computer, at least one required reading opinion data related to consent and non-consent opinion for the business execution of the business item when the business item meets the set criteria; providing, by the operating computer, the information of business item including a required issue to the collective intelligence convergence system by including the at least one required reading opinion data; connecting, by at least one participant terminal, the collective intelligence convergence system; generating, by the operating computer, approval or rejection data of each issue based on consent or non-consent opinion data on the information of business item including the required issue of participants input to the collective intelligence convergence system.

According to a third aspect of the present invention, there is provided a business execution method comprising: receiving, an operating computer, a business item provided from the proposer terminal; checking, the operating computer, whether the business item meets a set criteria; converging, the operating computer, a verification opinion of experts on the business item provided by registered experts who are provided information of the business item; confirming, the operating computer, whether the business item meets a set criterion based on verification opinions of the experts converged; generating, by the operating computer, at least one required reading opinion data of consent and non-consent for each issue on the business item based on the verification opinions of the experts when the business item meets the set criteria; setting, by the operating computer, a profit distribution ratio for each issue and providing at least one required reading opinion data related to the issue to at least one participant terminal; converging, by the operating computer, consent or non-consent opinion on the required reading opinion inputted from the at least one participant terminal during a predetermined period during and performing statistical process thereof; checking, by the operating computer, the reading ranking(order) of the required reading opinions for each item; calculating, by the operating computer, the profit distribution ratio of business execution based on the reading ranking and the period (or time) of the required reading opinions for each issue, wherein the reading ranking and the period (or time) are calculate a period (or time) located in the same reading ranking of the required reading opinions for each issue by checking the reading ranking of the require reading opinions for each issue checked is changed.

According to a fourth aspect of the present invention, there is provided a business execution method comprising: providing, by a proposer terminal, in formation of business item to an operating computer using communication means; providing, by at least one expert terminal, expert knowledge, background knowledge and feasibility verification information of business execution on the business item to the operating computer using communication means; deciding, by the operating computer, whether to converge opinions of participants regarding the business item based on the feasibility verification information of business execution which received from the expert terminal; receiving, by the operating computer, relevant opinions provided by at least one participant who has read the expert knowledge and background knowledge when it is decided to converge the opinions of participants; deciding, by the operating computer, to execute the business item when the relevant opinion transmitted from the at least one participant terminal meets a set condition; providing, by the operation computer, a basic business plan information including the total investment amount and the investment amount for each item required for the business execution to the expert terminal; providing, by the expert terminal, expert knowledge and detailed description related to the basic business plan information and verification information of the basic business plan to the operating computer; receiving, by the operating computer, relevant opinion provided by participant terminal of at least one participant who read the expert knowledge and the detailed description of the experts; deciding, by the operating computer, basic business plan for setting profit distribution information to be distributed to person concerned including expert, participant and consumer in relation to the business item when the relevant opinion transmitted from the at least one participant terminal meets a set condition; providing, by the operating computer, information of service providers for each item that needs to be selected from among the execution information of the business item; providing, by the expert terminal, expert knowledge, detailed description thereof and verification information related to the service provider regarding information of the service providers for each item of the business execution to the operating computer; receiving, by the operating computer, relevant opinion provided by participant terminal of at least one participant who read the expert knowledge and the detailed description of the experts; deciding, by the operating computer, selection of at least one service provider when the relevant opinion transmitted from the at least one participant terminal meets a set condition; providing, by the service provider terminal of at least one selected service provider, promotion schedule and performance information for each item of business execution to the operating computer; providing, by the operating computer, the promotion schedule and performance information for each item of business execution of the service providers to the expert terminal; providing, by the expert terminal, expert knowledge, detailed description and verification information related to the promotion schedule and performance information for each item of business execution to the operating computer; receiving, by the operating computer, relevant opinion provided by participant terminal of at least one participant who read the expert knowledge and the detailed description of the experts; deciding, by the operating computer, whether to correct or confirm the profit distribution ratio set based on the related opinion transmitted from the at least one participant terminal.

### ADVANTAGEOUS EFFECTS

According to the present invention, it is possible to verify the feasibility of carry out a business item by converging opinions from various participants who have received expert verification and expert background information on the business item, and to separate the investment items into essential and selective investments in the course of executing the business of verified business items, and to optimize the investment in this part by extracting the cost-saving non-essential factors from the selective investments, and optimizing the investment in this part.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a schematic configuration diagram of an embodiment of a business execution system of the present invention;
FIG. 2 is a schematic configuration diagram of an example of an operating computer which is a main part in the business execution system of the present invention;
FIG. 3 is a schematic configuration diagram of an example of a member information management module which is a main part in the operating computer of the present invention;
FIG. 4 is a schematic configuration diagram of an example of a propose information management module which is a main part in the operating computer of the present invention;
FIG. 5 is a schematic configuration diagram of an example of an expert information management module which is a main part in the operating computer of the present invention;
FIG. 6 is a schematic configuration diagram of an example of a participation information management module which is a main part in the operating computer of the present invention;
FIG. 7 is a schematic table of an embodiment of decision making and contribution estimation of important issues using a collective intelligence convergence system, which is a main procedure of an embodiment of a business execution system of the present invention;
FIG. 8 is a schematic configuration diagram of an example of an intelligence type data management module which is a main part in the operating computer of the present invention;
FIG. 9 is a schematic configuration diagram of an example of a business execution information management module which is a main part in the operating computer of the present invention;
FIG. 10 is a schematic configuration diagram of an example of a calculation information management module which is a main part in the operating computer of the present invention;
FIG. 11 is a schematic configuration diagram of an embodiment of a business execution method of the present invention;
FIG. 12 is a schematic configuration diagram of other embodiment of a business execution method of the present invention.

### DETAILED DESCRIPTION OF THE PREFERRED EMBODIMENT

Hereinafter, embodiments of the present invention will be described in detail with reference to the accompanying drawings.

For convenience of the description of the embodiments of the present invention, among terms used in the description of the embodiments of the present invention to be described below, configurations of the present invention may refer to configurations of hardware including at least one hardware processor and a memory storing programs or instructions executed by the at least one processor itself and also refer to configurations of a web program or computer program executed by using the hardware resources. For example, an operating computer among the configurations of the present invention may be computer hardware itself and may be a web program or computer program executed by using the hardware resources including at least one hardware processor and a memory storing programs or instructions executed by the at least one processor of the computer or refers to each module constituting the computer program.

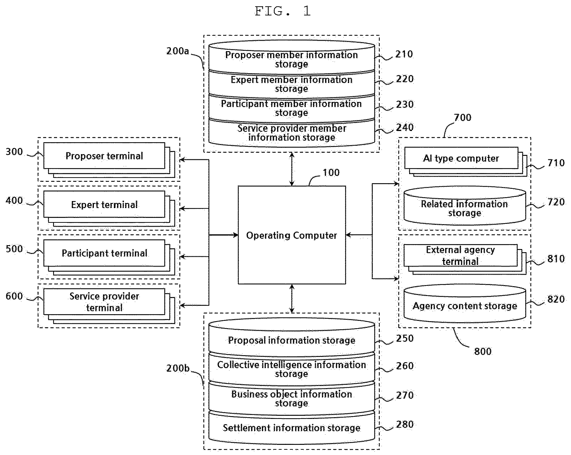

FIG. 1 is a schematic configuration diagram of an embodiment of a business execution system of the present invention. As illustrated in FIG. 1, the business execution system of the present invention is a configuration including an operating computer to manage the business execution by receiving and managing the expert knowledge and background knowledge of the registered experts, and converging opinions presented by various participants referring to the expert knowledge and background knowledge of the experts; the member information storage 200a, which is included in the operating computer 100 or is connected to the operating computer 100 by means of communication, and includes the proposer member information storage 210, expert member information storage 220, participant member information storage 230, and service provider member information storage 240 to store information of proposers, experts, participants and service provider members who sign up and certify their members; the proposal information storage 250 for storing business target information, such as proposal information provided by proposer members, collective intelligence information provided by expert members and participant members, information on selected business items and verification criteria, and calculation criteria and settlement information for profit to be distributed at the end of the business, etc. , either included in the operation computer 100 or connected to the operation computer 100 by means of communication; the contents information storage 200b, including the collective intelligence information storage 260, the target information storage 270, and the settlement information storage 280; at least one proposer terminal 300 to access the above operating computer 100 by means of communication and to propose business items using the website provided by the operating computer 100 or the application program executing on board; at least one expert terminal 400 to provide the operating computer with expert knowledge and background knowledge of business items, etc. using the website provided by the operating computer 100 or the application program executing on board; and accessing the operating computer 100; a participant terminal 500 to access the operating computer 100 by means of communication and to read the expert knowledge and background information on the business items of experts using the website provided by the operating computer 100 or the application program executing on board; and to provide feedback on the operating computer 100; at least one service provider terminal 600 to access the operating computer 100 by means of communication and to provide information on the execution of business items using the website provided by the operating computer 100 or the application program executing on board; and to provide information on the business execution to the operating computer 100; the intelligent computer division 700, which includes the intelligent computer 710 and the related information storage 720, to provide the operating computer 100 with intelligent information about legacy information and business items required to carry out the business; external agency computer division 800 equipped with external agency computer 810 and agency content storage 820 to provide public information on business items through communication with the operating computer 100.

The operating computer 100 may be configured as a server computer that can provide or receive data or store data or received data to web programs or application programs running on the members' user terminals, and that has a computer program or web program for the management of business execution system of present invention, and that can communicate with the user terminals.
The member information storage 200a and contents information storage 200b may be configured as independent database server (DBMS), and may also be included in the operation computer 100. The terminals 300 to 600 used by the proposers, experts, participants or service provider members have the means to access the operating computer 100, access the website provided by the operating computer 100 and access the application program download computer to download and run the application program related to this invention, such as PC, laptop computer, tablet computer, smart phone, etc.
The intelligent computer 710 of the intelligent computer division 700 may consist of a server computer that inquires the data at the request of the operating computer 100 and contains an artificial intelligence algorithm to generate and provide the resulting data as requested by the operating computer 100, and may also be configured as part of the operating computer 100.
In addition, the external agency computer 810 of the external agency computer division 800 may consist of server computers of various private or public institutions that can provide so-called big data, such as real estate-related data, management-related data, social data, statistical data, etc.

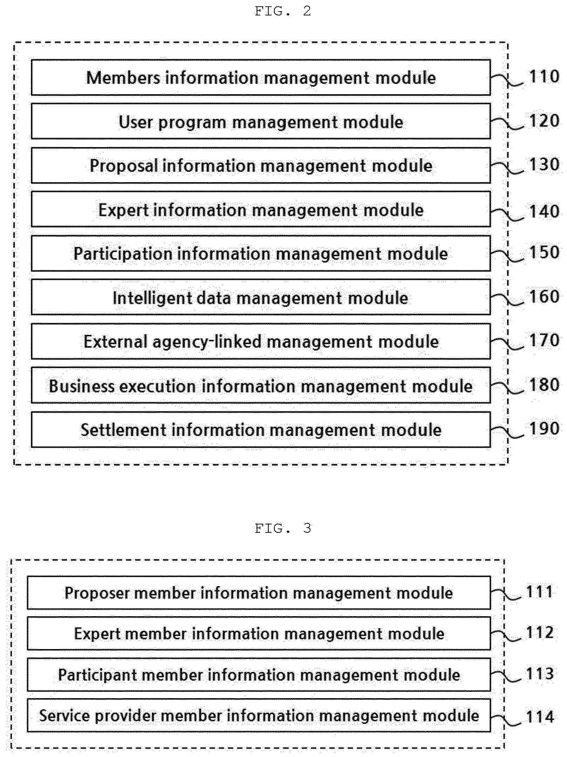

FIG. 2 is a schematic configuration diagram of an example of an operating computer which is a main part in the embodiment of the business execution system of the present invention. As illustrated in FIG. 2, an operating computer 100 of the present invention is a configuration including: a member information management module 110 for storing sign up information and various information of members including proposers of business items using the services of the business execution, experts in each field with expert intelligence on business items, various participants to demonstrate their intelligence on business items, and service providers consisting of operators in each field necessary for the execution of the business, and executing user certification etc., of the members; a user program management module 120 for managing and updating the unique information of websites or application programs running on the user terminal used by the members; a proposal information management module 130 for receiving and storing the proposed information of the business item inputted in the proposer terminal 300, setting a criteria for executing the subsequent procedures for selection of the proposed information, and filtering whether the proposal meets the set criteria; an expert Information management module 140 for receiving and storing selection opinions for future procedures according to the set criteria for the proposal information inputted by registered expert members, expert knowledge and background knowledge data for verification of selected proposals, and managing upgrades of participants to expert members, etc.; a participation information management module 150 for converging opinions from participants related to the opinions presented in the provision of expert knowledge and background knowledge of the proposed business items, and making it statistically, managing by dividing the opinions of experts and participants on the business items into required reading opinions that the participants must read and selective reading opinions that the participants can read selectively in a quantified manner, and managing the selection of the proposed business items for business execution based on the statistics of the required reading opinions; an intelligent data management module 160 for managing information in conjunction with the intelligent computer division 700 for the purpose of selecting proposed business items as targets for business execution and for the verification and assistance of existing accumulated social data in the course of the project execution of the selected business items; an external agency-linked management module 170 for managing information in conjunction with the external agency computer division 800 in order to obtain the cooperation of private or public big data necessary for the selection of proposed business items and for the business execution of selected business items; a business executing information management module 180 for managing optimizing the investment items and timing of investment funds, optimizing business execution, and managing business execution process information in the selected business items; a settlement information management module 190 for setting distribution information on profits from business execution, statistical management of investments and profits at the end of business execution, and managing profit distribution information.

Each configuration of the operating computer 100 is not limited to this, and addition, deletion, and modification can be freely configured to optimize the business execution system of the present invention.

FIG. 3 is a schematic configuration diagram of an example of a member information management module which is a main part in the embodiment of the operating computer of the present invention. As illustrated in FIG. 3, a member information management module of the present invention comprising: a proposer member information management module 111 for managing information related to a proposer registered as a member to propose a business item using a business execution service provided by the operating computer 100; an expert member information management module 112 for managing the registered expert information and the registration requirements of experts who provide the necessary expert knowledge and background knowledge thereof in the process of verification and business execution for the selection of business items for the proposed business items; a Participant member information management module 113 for managing member registration and managing registered participant information by providing participants with opinions for selecting targets for business execution by referring to the expert knowledge and background knowledge of the expert members regarding the proposed business items; a service provider member information management module 114 for managing business item related specialized companies, information of the specialized companies, etc., and member registration of service companies that execute selected business items and managing registered service provider information.

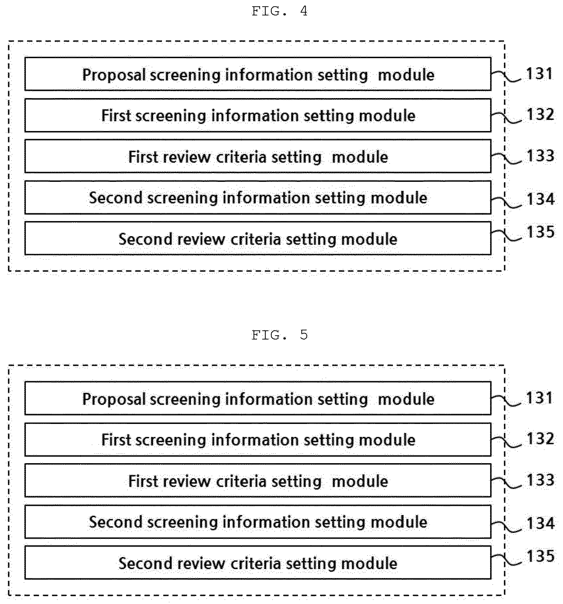

FIG. 4 is a schematic configuration diagram of an example of a proposal information management module which is a main part in the embodiment of the operating computer of the present invention. As illustrated in FIG. 4, a proposal information management module 130 of the present invention comprising: a proposal screening criteria setting module 131 for setting the criteria to enter the selection process in relation to the proposed type and content; a first screening information setting module 132 for setting a criteria for a target for executing first verification on a proposed business item that has passed a set criteria for entering a screening target of the proposed business item; a first review criteria setting module 133 for setting first review criteria of business items meeting the criteria set in the first screening information setting module 132; a second screening information setting module 134 for setting a criteria for a target for executing a second verification on a business item that has passed the criteria set by the first review criteria setting module 133; a second review criteria setting module 135 for setting second review criteria of business items that meet the criteria set in the second screening information setting module 134.

The proposal of the business item to be provided to the business execution service is not limited to the provider of the proposal and the content of the proposal. However, the proposer who provides the proposal of the business item must be registered as a member in the business execution system of the present invention, and selection criteria regarding the type and contents of the provided proposal may be set. In other words, anyone can make suggestions, but whatever is proposed is not selected.

The proposed screening information setting module 131 may score items of a business item to select a business item that can be verified for selection among business items proposed by all registered proposer members. For example, 30 points are scored as a business balance and plan item faithful to the business execution system of the present invention, 40 points as a possibility of business execution (realization), and 30 points as a presence or absence of obstacles related to business execution, based on 100 points. In above-mentioned distribution criteria, a business item with a certain score or higher can be set as a verification target.

In addition, the first purification information setting module 132 may set a selection criterion for performing a first examination for a business item that has passed the setting criteria of the proposal information module 131. For example, a business item with a majority consent of a registered expert member, a business item with a consent of 10% or more of experts and a score of 90 points or more on the above-mentioned distribution criteria, and business items with a score of 90 or more regarding the distribution criteria by a business manager's side or an organization with specific reliability can be set as the selection criteria.

In addition, the first review information setting module 133 sets the first review pass criteria for business items that have passed the criteria of the first screening information setting module 132. It can be set up to be performed by expert members. As the first review criteria, for example, business items with a consent of 2/3 or more of registered experts and scores of 80 or higher, business items with a consent of 1/3 or more of registered experts and scores of 90 or higher, a business item with the consent of the majority of investors or a business item with the consent of the majority of consumers (contractors) can be set the first review criteria.

In addition, the second screening information setting module 134 sets the second screening criteria for selecting an object for performing a second review for business items that has passed the setting criteria of the first examination information module 133. The second screening criteria can be set an automatically subject and an essential subject. The automatically subject means matters that submit automatically to discussion and the essential subject means matters that must submit to discussion. The business item that passed the expert verification matters in the first review and the purchase contractors of the business and the result of the business that agreed with the conditions set can be set the automatically subject to the second screening. The final selection of business items, the final decision of the business plan, the selection of major service providers, the final decision of the profit dividend rate, and the matters delegated to the expert group related to the ordering (selection) can be set the essential subject.

In selecting a target for business execution, an expert check means, which is a minimum rule for preventing an arbitrary of experts, can be set as an essential subject. The check means can be defined as all matters related to business, such as disqualification of experts, dismissal or change of a service provider decided by an expert, and modification of a business plan determined by an expert.

In addition, the second review information setting module 135 is a submission matter for a business item that has passed the first review, for example, a business plan confirmation matter, a major service provider selection matter, a profit dividend rate decision matter, and a service order (selection) regarding delegation matters to a related expert group, it may be set by utilizing a collective intelligence convergence system that collects and determines opinions provided by the participant terminals.

The collective intelligence convergence system for the decision of the business items of the business execution system of the present invention and the decision on important issues in the business execution process comprising: an expert opinion management means for receiving and storing expert opinion data such as opinions on agreement or opposition, and at least one basis and description on the opinions, transmitted by at least one expert on the proposed issue; an background knowledge management means for providing at least one expert opinion data received by the expert opinion management means to provide participants with at least one expert opinion data based on agreement and opposition data and the score data given to them, and dividing them into at least one required reading opinion data and at least one selective reading opinion data, and storing them as background knowledge data on the issues; a participation opinion data management means for receiving participant opinion data including consent or non-consent data to the required reading opinion data and the selective opinion data included background knowledge data of expert and scores data inputted by participants, and processing them as a collective intelligence convergence data; an expert opinion ranking management means for determining the ranking based on the opinion data of the participants stored in the participation data management means and updating the required reading opinion data and the selective reading opinion data based on the ranking to provide the background knowledge management module.

In addition, collective intelligence convergence system further comprising: a small amount opinion management means for granting a position of ranking increase for opinions with high scores given by the participants, although they have received a small amount of consent in which the small amount opinion management means manages at least one selective reading opinion data; an opinion history management means for providing information on the source, rebuttal or supplementary opinions of the opinion data in the process of reading the required reading data and selective reading data by participants; and a result verification management means for generating a report of the type established based on the collective intelligence convergence data and providing the report to the provider of the issues, and providing the collective intelligence data that is the basis of the report for verification by the provider of the issues.

In addition, the required reading opinion data and the selective reading opinion data can be configured to be updated in real time by the expert opinion ranking management means.

The expert opinion management means provides an opinion presentation form to the expert terminals of the experts. The opinion presentation form includes: an opinion summary input module for inputting a predetermined number of characters in agreement or opposition opinion on the issue; a key ground input module for inputting the key grounds for the agreement or opposition opinion as many as the set number; a detailed description input module for inputting the detailed description of the agreement or opposition opinion on the issues.

The collective intelligence convergence data can be formed including: required reading opinion and selective reading opinion data of pros and cons regarding expert opinion data of pros or cons on the issue are set to a predetermined number and provided to the set number of participants; the consent, non-consent, and scores regarding the required reading opinion data and the selective reading opinion data entered by each participant are displayed, and each participant may be configured to calculate the average value of the scores of the required reading opinion data and the selective reading opinion data.

Using the collective intelligence convergence system, it is possible to designate, modify or change the essential and automatically factors
FIG. 5 is a schematic configuration diagram of an example of an expert information management module which is a main part in the embodiment of the operating computer of the present invention. As illustrated in FIG. 5, an expert information management module 140 of the present invention comprising: an expert opinion content management module 141 for receiving and managing content such as expert knowledge provided by registered expert members regarding business items and detailed descriptions related thereto; and a background knowledge content management module 142 for managing required reading opinion data and selective reading opinion data based on the opinions of experts received from the expert opinion content management module 141 and managing them as background knowledge content to be provided to participants.

Anyone who participates in the business execution system of the present invention can participate and perform activities, but can set strict qualification conditions for securing the reliability of expert opinion and knowledge. For example, as a condition of registration as an expert in the business execution system of the present invention, first, a majority of the already registered experts have agreed, and second, more than a quarter of the investors or consumers (contractors) have agreed to the business item, third, as the expert, the candidate who achieved 20 or more results in the 1st review or 10 cases in the 2nd review in the process of selecting the target to perform the project and secured more than 80% reliability in the established reliability evaluation system. A candidate who satisfies any one or more of the above registration conditions can be registered as an expert.

Here, the reliability is, for example, a basic reliability score of 50%, and +10% for the votes of the items that participated in the first review, -15% for negative votes, and the votes for the items that participated in the second review. It can be configured to calculate the trustworthiness of the expert by giving -5% to +30% of the vote.

When an expert registered in the business performance system of the present invention is checked and fails to meet the above-mentioned qualification criteria, it may be configured to automatically disqualify the expert member.

In addition, it can be configured so that the general public can freely participate in the entire process of the business execution system of the present invention.

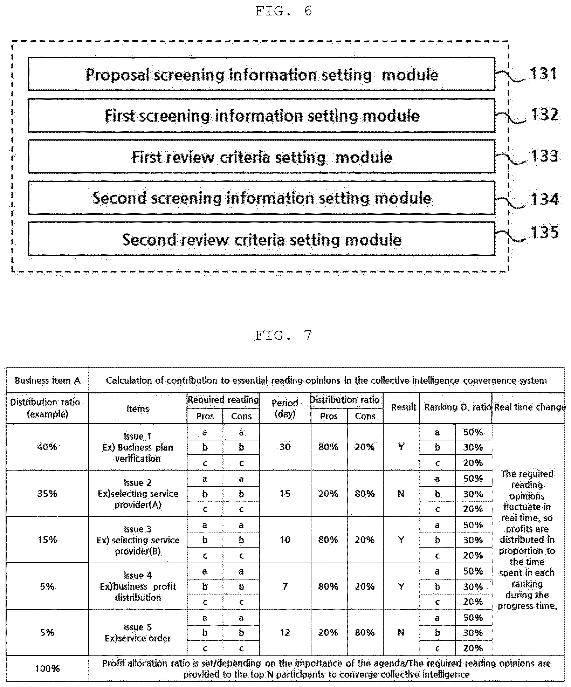

FIG. 6 is a schematic configuration diagram of an example of a participation information management module which is a main part in the embodiment of the operating computer of the present invention. As illustrated in FIG. 6, a participation information management module 150 of the present invention comprising: a required reading opinion management module 151 for receiving participant reading, participant opinion and scoring situation of required reading opinion included in the background knowledge generated in the background knowledge content management module 142 of the expert information management module 140, and converging collective intelligence of participants regarding business items; and a points and rank generation module 152 for calculating the contribution of participants who have read the required reading opinions related to the business items, and for calculating the distribution ratio and ranking of the business performance profit accordingly.

In order to promote the formation of required reading opinions that are important for collective intellectualization of important items of business items, it can be configured to distribute the profits of business execution to the required reading opinions according to the contribution of required reading opinions on verification of business execution.

Since the required reading opinion itself and the ranking according to the present invention fluctuate in real time, the distribution of profits of the business execution for the required reading opinion fluctuates in real time. For example, with regard to the important issue of the business item, the profits of the business execution can be distributed in proportion to the time in each rank during the progress of the collective intelligence convergence system.

FIG. 7 is a schematic table of an embodiment of decision making and contribution estimation of important issues using a collective intelligence convergence system, which is a main procedure of an embodiment of a business execution system of the present invention. As illustrated in FIG. 7, the decision making and contribution calculation using the collective intelligence convergence system of the present invention include, for example, the distribution ratio of business profit and the collective intelligence convergence period (time) according to the importance of the issue, 40% and 30 days on the issue of whether to verify (confirm) the business plan, 35% and 15 days on the issue for the selection of a service provider for work A, 15% and 10 days on the issue for the selection of a service provider for business B, 5% and 7 days on the issue for decision of business profit allocation, 5% and 12 days on the issue for delegation to the expert group related to service order will be set. The required reading opinions for converging collective intelligence can be set to the top five. The required reading opinions are presented in consent and non-consent opinions on the issue. As for the result of convergence of collective intelligence for 30 days on the business plan verification (confirmation) issue, 80% of consent and 20% of non-consent are decided, and the result of decision making is confirmed. The ratio of profit distribution by ranking of required reading opinions is allocated into 50% for the first rank, 30% for the second rank, and 20% for the third rank. The contribution ratio of required reading opinions can be calculated according to the distribution ratio for each ranking of the business profit corresponding to the profit distribution ratio of 40%. However, due to the nature of the collective intelligence convergence system of the present invention, the required reading opinions fluctuate in real time, so it can be configured to make profit distribution in proportion to the time of staying in each rank during the progress time. More specifically, the ranking of the required reading opinions is determined by the number of participants' consent and the number of points, so the ranking is not determined according to the period (or time) of staying in a particular ranking. That is, the ranking is determined based on the collective intelligence convergence system, but since it can fluctuate in real time, it can be assumed that the time spent in each ranking is calculated and the profits are distributed. For example, if A, A, B, B, B, C, and B opinions are occupied each day for 7 days during the set period in the first opinion among the required reading opinions on issue 1, assuming that the profit allocated to the first opinion is 700 million won, It can be structured such that A opinion is 2/7, B opinion is 4/7, and C opinion is 1/7.

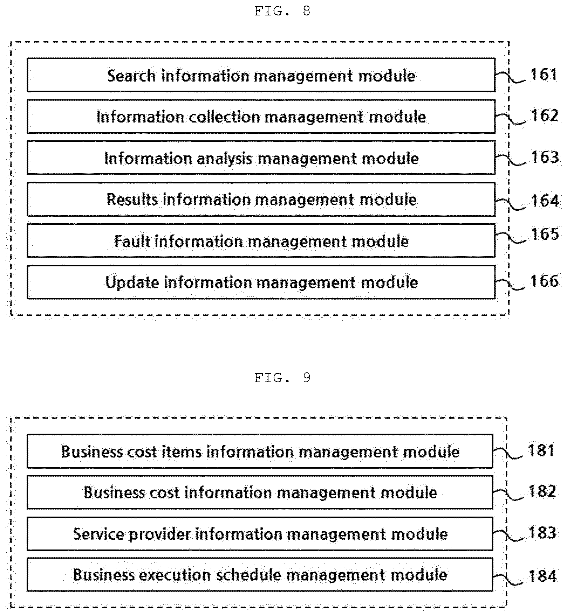

FIG. 8 is a schematic configuration diagram of an example of an intelligent data management module which is a main part in the embodiment of the operating computer of the present invention. Based on the use of the collective intelligence convergence system for the selection of business items in the business execution system of the present invention and the determination of major issues in the business execution process, intelligent data can be utilized for more specific and more objective verification. As illustrated in FIG. 8, an intelligent data management module 160 of the present invention comprising: a search information management module 161 for managing search information such as keywords related to a required subject; an information collection management module 162 for inquiring and collecting related information based on the search information; an information analysis management module 163 for analyzing the collected information and filtering the information according to the subject; a result information management module 164 for deriving a result as an answer to the subject; a failure information management module 165 which is a verification result of whether there is an error in the derived result or if there is a failure that occurs when the result is reflected; an update information management module (166) for updating the result data in real time considering the fact that new data on the subject is updated in real time.

The intelligent data management module 160 may be configured as the operating computer100 itself, or may be configured in connection with the intelligent computer division 700.

FIG. 9 is a schematic configuration diagram of an example of a business execution information management module which is a main part in the embodiment of the operating computer of the present invention. As illustrated in FIG. 9, a business executing information management module 180 of the present invention comprising: a business cost item information management module 181 for dividing and managing. in order to optimize the investment in business performance, the items of business execution into required items that are essential factors of business execution that must be invested, and selective items that are non-essential factors of business execution that can selectively decide whether to invest; a business cost information management module 182 for setting an investment ratio of business costs to essential and non-essential factors that can reduce costs within the overall investment cost range, In setting the investment ratio for the required and selective items determined in the project cost information management module 181; a service provider information management module 183 for real-time managing the various information of the service provider for the continuity and success of the business execution for the service provider selected for each item of the business execution; a business execution schedule management module 184 for preventing the increase in investment by real-time management of the execution schedule and the entire business execution schedule presented for each item of business execution.

The business cost information management module 182, for example, if there is an investor who has invested the investment required to execute the business, so that the financial procurement costs (loan interest, etc.) that may be incurred in the investment can be returned to the capital investor, can be configured.

In addition, the cost of sales fees, etc., which may be incurred in relation to the sale of the result of the business execution after the completion of the business may be configured to be returned to the consumer (contractor) who is planning to purchase.

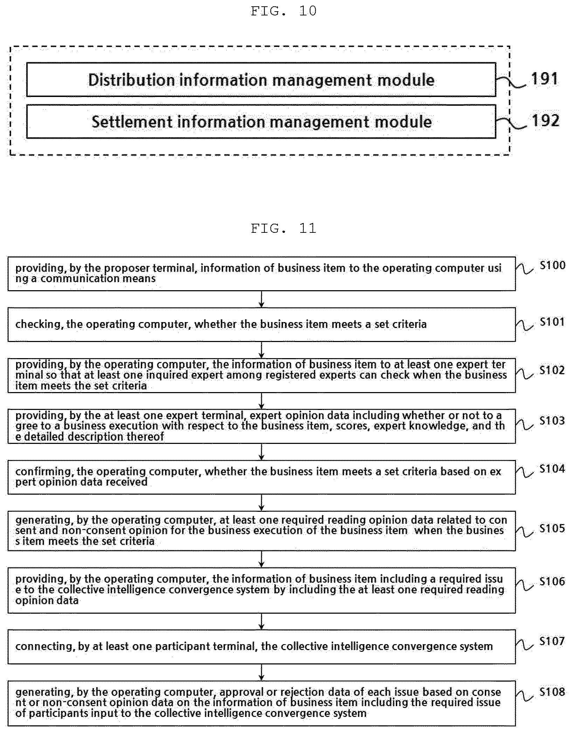

FIG. 10 is a schematic configuration diagram of an example of a settlement information management module which is a main part in the embodiment of the operating computer of the present invention. As illustrated in FIG. 10, a business executing information management module 180 of the present invention comprising: a distribution information management module 191 for managing a distribution ratios setting and updating of distribution ratios, etc. in order to distribute profits to business proponents, investors, consumers, and participants of collective intelligence convergence system, when business profits are generated in the business performance system of the present invention; a settlement information management module 192 for managing the distribution of business profits set in the distribution information management module 191.

The distribution ratio of business profit in the distribution information management module 191 can be set as follow: for example, 5% to a provider of essential items (raw materials such as land) of a business item, 5% to a consumer who purchases a product that is the result of completing a business, 30% to fund investors, 10% to business service providers, and 50% to contributors to required reading opinions. The distribution ratio of the business profit is basically decided by the expert group first, and then it can be confirmed by the collective intelligence convergence system as the second as the issue to confirm the business plan.

In addition, allocating business profits to investors who purchase goods and services (products) can allow them to be further allocated separately from allocating ordinary profits to investors. In other words, if an investor invests with confidence in a business using this system, the quality of products produced in this business can be trusted, so there is a high possibility of purchasing products from a consumer position, not an investor. It has the meaning of accelerating and granting additional profit for the actual purchase decision.

In addition, in a similar pursuit, 'the person who provided the required items' to the business also obtains the opposite payment (sales amount) while selling the required items (e.g., land in real estate development) at an appropriate price for the project, but separately It is an important medium to motivate the provision of the item and promote the decision on the provision by distributing a certain percentage of the profits, even if the investor is not an investor.

As described above, the business execution system of the present invention further enhances investment in essential factors (required items) by distinguishing essential and non-essential factors of the investment cost, and the items that can be saved among the non-essential factors can minimize the cost of the investment.

In addition, it is possible to return (distribute) costs to investors or consumers for unnecessary items among non-essential factors of investment costs, part of the business profit can be distributed to the person who provided the key item among the essential factors of the cost, and when an investor purchases the products of this business, a portion of the business profit may be distributed.

Since the business execution system of the present invention is characterized by allocating business profits according to the degree of business contribution, the system does not focus on profits to a specific business operator but finds various factors contributing to business success and automatically returns profits to contributors.

In addition, from the business planning stage, the probability of success is rapidly increasing by establishing a system that allows the service provider to perform the best performance by selecting the best service provider according to the verified business plan and thoroughly verifying it based on collective intelligence. The likelihood of failure decreases drastically, minimizing investment losses.

The return of the cost to the investor or the consumer is a structure that is distinct from the distribution of the profits performed by the business, and the profit distribution is the dividend for the remaining profit when the business is settled after the completion of the business, while the return is performed during the business process . It is a configuration that is returned in executing costs.

Specifically, for example, returning the financial procurement cost of a real estate development business to a capital investor is a payment (reduction) of interest equivalent to a capital investor while the business is in progress. It is a component that discounts or compensates by reflecting it in the selling price at the time it occurs.

In other words, prior to the business settlement, the investor can expect to receive interest equivalents during the business period, and the consumer sees the effect of purchasing the right product at a lower price than the market price when purchasing goods or services by the system, thereby promoting investment and consumption. It can act as an important factor. Among the elements of the embodiment of the business execution system of the present invention, it is not only applied to investment funds, but can also be applied to financing, for example, of a loan (rental) method.

FIG. 11 is a schematic configuration diagram of an embodiment of a business execution method of the present invention. As illustrated in FIG. 11, the business execution method of the present invention comprising: providing, by the proposer terminal, information of business item to the operating computer using a communication means (S100) ; checking, the operating computer, whether the business item meets a set criteria (S101); providing, by the operating computer, the information of business item to at least one expert terminal so that at least one inquired expert among registered experts can check when the business item meets the set criteria (S102) ; providing, by the at least one expert terminal, expert opinion data including whether or not to agree to a business execution with respect to the business item, scores, expert knowledge, and the detailed description thereof (S103); confirming, the operating computer, whether the business item meets a set criteria based on expert opinion data received (S104); generating, by the operating computer, at least one required reading opinion data related to consent and non-consent opinion for the business execution of the business item when the business item meets the set criteria (S105); providing, by the operating computer, the information of business item including a required issue to the collective intelligence convergence system by including the at least one required reading opinion data (S106); connecting, by at least one participant terminal, the collective intelligence convergence system (S107); generating, by the operating computer, approval or rejection data of each issue based on consent or non-consent opinion data on the information of business item including the required issue of participants input to the collective intelligence convergence system (S108).

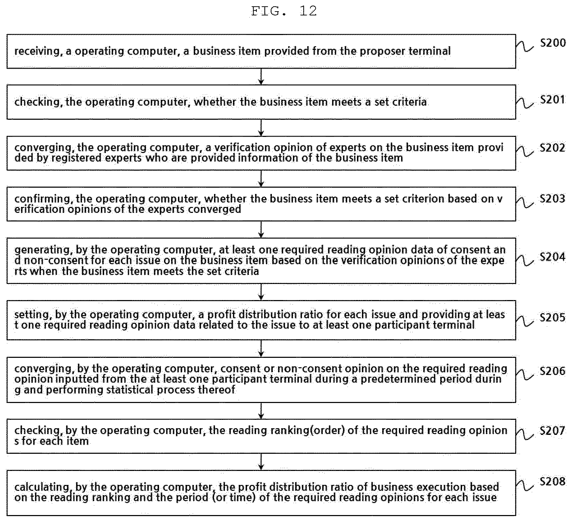

FIG. 12 is a schematic configuration diagram of other embodiment of a business execution method of the present invention. As illustrated in FIG. 11, the business execution method of the present invention comprising: receiving, an operating computer, a business item provided from the proposer terminal (S200); checking, the operating computer, whether the business item meets a set criteria (S201); converging, the operating computer, a verification opinion of experts on the business item provided by registered experts who are provided information of the business item(S202); confirming, the operating computer, whether the business item meets a set criterion based on verification opinions of the experts converged (S203); generating, by the operating computer, at least one required reading opinion data of consent and non-consent for each issue on the business item based on the verification opinions of the experts when the business item meets the set criteria (S204); setting, by the operating computer, a profit distribution ratio for each issue and providing at least one required reading opinion data related to the issue to at least one participant terminal (S205); converging, by the operating computer, consent or non-consent opinion on the required reading opinion inputted from the at least one participant terminal during a predetermined period during and performing statistical process thereof (S206); checking, by the operating computer, the reading ranking (order) of the required reading opinions for each item(S207); calculating, by the operating computer, the profit distribution ratio of business execution based on the reading ranking and the period (or time) of the required reading opinions for each issue, wherein the reading ranking and the period (or time) are calculate a period (or time) located in the same reading ranking of the required reading opinions for each issue by checking the reading ranking of the require reading opinions for each issue checked is changed (S208).

In the embodiment of the present invention described above, the operating subject is described as an operating computer, but the operating computer may be configured as a computer of an expert operator who manages the entire business.

The business execution system and method of the present invention described above can be summarized as follows.

### <Minimize investment loss by rational distribution of business profits>

By dividing the essential and non-essential factors of the investment cost, the investment in the essential factors (essential items) can be further strengthened and the savings among the non-essential elements can minimize the expenditure of the cost. Among the non-essential factors of the investment cost, unnecessary costs can be returned (distributed) to investors or consumers, and part of the business profits can be distributed to those who have provided key items among the essential factors of the investment cost. When an investor purchases goods for business execution, a portion of the business profit may be distributed.

Since business profits are distributed according to the contribution level of the business, profits are not concentrated on a specific business operator, and various factors contributing to business success can be found and the profits can be automatically attributed to the contributors.

From the project planning stage, it is thoroughly verified based on the collective intelligence, and the optimal service provider is selected according to the verified business plan. The probability of success in the business is soaring and the probability of failure is rapidly decreasing, which can minimize the loss of investment.

### <Decision by collective intelligence convergence system>

In the present invention, it is determined whether or not the main stages of the project including the business plan and important contents (such as selecting a major service company) are collective intelligence convergence system and necessary readings to facilitate the formation of required reading opinions as background knowledge in collective intelligence convergence. It is characterized by distributing a certain percentage of business profit to contributors to the opinion.

### <System opens to a large number of unspecified people>

In the present invention, an expert group is operated, but anyone can be incorporated into an expert group when certain requirements are met, and the collective intelligence convergence system is also 100% open to the general public. It is characterized by (possible business proposal, service company recommendation and direct participation).

### <Issue screening means (first review by expert group)>

Due to the openness of the present invention, anyone can access it, but it is not efficient in terms of time and cost to review anyone or any issue (subject), so it is an expert as a device that can screen items that can be determined by the collective intelligence convergence system. Form a group to conduct the first screening. It is configured to determine the first review target and to evaluate the issue that corresponds to the review target, to give consent and scores, and to pass to the second review (collective intelligence convergence system) when certain criteria are met (first review pass criteria).

In addition, in order to prevent the entire group of experts from being excluded, it is possible to define matters that are essential for the second review, and when certain criteria are met, the conditions for the second review can be set automatically regardless of the first review. On the other hand, in order to ensure the smooth operation of the first review, it is possible to set the registration criteria for experts and pay a predetermined fee or allocate a portion of business profits during the activities of the experts to motivate them.

Therefore, the expert can provide convenience to system users by classifying the name with an 'E' and displaying the proposed results and reliability.

### <profit distribution to contributors with required reading opinions>

This is a configuration that allocates a certain percentage of business profit to a person who contributes to the required reading opinion, which is the core of the collective intelligence convergence system of the present invention, when calculating the business in proportion to the contribution. Gives honor effect by paying points, etc. instead, and reflecting it in the credit rating. (You can set the option to search in the order of credit rating in order to search opinions, so they may be exposed before others in opinion search)
In addition, in order to be a required reading opinion of the present invention, since the majority of the general public needs to obtain consent, or the average score must be high, those who participate in the system make their own efforts to provide the optimal opinion secured with objectivity and rationality. Calculation of contribution to required reading opinions is calculated in proportion to the time of exposure to required reading opinions and can be settled and paid to each exposed person. It is a feature that can be a strong motivation by allocating business profits in order to promote the formation of required reading opinions that are important in collective intellectualization of important business matters.

The exemplary embodiments of the present invention described above are only some of various exemplary embodiments . It is natural that various exemplary embodiments included in the spirit of the present invention are included in the scope of the present invention, in which participants participate in the collective intelligence convergence system based on expert verification and expert verification data for each item in the process of project execution, from selection of business execution targets, as well as selection of business targets and investment optimization, as well as operators, investors and consumers Naturally, various embodiments included in the technical idea of the present invention regarding the performance of a business in which profits are returned are included in the protection scope.

## Claims

1. A business execution system comprising:
an operating computer; a user program that is output or executed by at least one user terminal to be connected to the operating computer and engaged in business execution; wherein the operating computer provides at least one required reading opinion data for each issue of business item generated based on expert opinion data by a collective intelligence convergence system, converges opinions of at least one participants and performs a verification for each issue of business item and business execution, and prevents an arbitrary of experts by an expert check means.

2. The business execution system of claim 1, wherein the operating computer comprising a proposal information management module for receiving information of at least one business item input from the user terminal and managing a first verification result input by an expert performing a first verification according to a predetermined review criteria regulated for the business item, converging the collective intelligence of the participants who provided based on background knowledge consisting of expert opinions received from the collective intelligence convergence system regarding an automatically subject including a business item that has passed the first verification of the expert, a matter agreed by investors of the business item and purchase contractors of the business execution result of the business item, and required subject including a final selection of the business item, business plan decisions, service provider selections, profit dividends determinations, and delegation to a expert group related to ordering or selecting a service provider, and providing a second verification result performed through the regulated criteria based on the converged collective intelligence, a business executing information management module for dividing and managing required items which are essential factors of business execution that must be invested and selective items which are non-essential factors whether to invest or not can be selectively determined in order to optimize the investment in the business execution of the business item determined by the proposal information management module, setting an investment ratio for the required items and the selective items, and managing so that the cost saved in the non-essential factors can be returned to the investor of the business execution or the purchase contractor of the business execution result during the business execution; and a settlement information management module managing a profit distribution ratio to distribute the profits at a predetermined rate to investors, business operators, service providers, purchase contractors of the business execution result of the business item, and those who participate in the collective intelligence convergence system in connection with business execution; wherein the required subject include at least one matter as an expert check means, such as disqualification of experts to prevent experts from abusing one's powerin the first verification, dismissal or change of service providers, and modification of business plans.

3. The business execution system of claim 2, wherein the expert check means is to examine the qualifications of experts participating in the first verification.

4. The business execution system of claim 2, wherein a predetermined profit distribution ratio is given to a person who participates in the generation of required reading opinions contributing to the business item-related decision-making in the second verification with respect to the business profit generated as a result of the business execution of the business item, in which the profit distribution ratio is calculated in proportion to each ranking and time by contributing to the required reading opinions for each issue.

5. The business execution system of claim 2, wherein in the first verification, business items that acquire a score given based on a set score for each item of the proposed business items, business items proposed by registered experts, business items with majority consent from registered experts, business items that meet set evaluation criteria evaluated by a specific institution, or business items that meet their complex set criteria are selected as a target of a first review.

6. The business execution system of claim 2, wherein the first verification determines a business item as a target of the first review as a business item passed the first verification when the business item selected meets the consent of a set ratio and a set score.

7. The business execution system of claim 2, wherein the proposal information management module performs a request for a second verification by including a business item passed the first verification to the required subject of the collective intelligence convergence system.

8. The business execution system of claim 2, wherein the experts who can participate in the first verification are the person who meets the set criteria, and the set criteria correspond to any one of the agreements of a majority of registered experts, the agreement of the set ratio of the business execution investor or the purchase contractors of the business execution result, acquisition of established results related to participation in expert verification of business items.

9. The business execution system of claim 2, wherein the experts who can participate in the first verification are retained or deprived of expert qualifications according to the numerical value set by the reliability calculated based on the verification results of the business items.

10. The business execution system of claim 9, wherein the reliability is calculated as the value set in agreement or opposition in the result of participation of expert regarding the verification of business items.

11. The business execution system of claim 2, wherein The collective intelligence convergence system makes decisions about at least one issue including verified business item in the first verification regarding the required reading opinions that must be read and the selective reading opinions that are not mandatory for reading.

12. The business execution system of claim 2, wherein the required reading opinions handled by the collective intelligence convergence system are plural and the decisions are made based on the content of consent and non-consent for each of the multiple required reading opinions.

13. The business execution system of claim 2, wherein the collective intelligence convergence system sets the progress time or duration for decision-making for each issue.

14. The business execution system of claim 2, wherein a first review shall be executed on the issues of business items verified in the first verification, and a second review shall be executed on the issues that have passed the criteria of the first review in the collective intelligence collection system.

15. The business execution system of claim 2, wherein the collective intelligence convergence system generates at least one required reading opinion of consent and non-consent opinion regarding the issues based on the issues including essential subject and automatically subject in expert opinion data and scores given, and converges consent and non-consent opinions of participants regarding at least one required reading opinion and performs statistical processing of them.

16. A business execution method comprising: providing, by a proposer terminal, information of business item to the operating computer using a communication means; checking, by an operating computer, whether the business item meets a set criteria, selecting it as a business item to be review; checking, by at least one expert terminal, whether a selected business item meets set criteria, selecting it as a business item of a target of business execution and providing selecting result with expert opinion to the operating computer; generating, by the operating computer, required reading opinion data on issues for each item in need of decision making including essential decision issue regarding business execution of the business item based on expert opinion on the business item; providing, by at least one participant terminal, consent or non-consent opinion data regarding the required reading opinion data to the operating computer; receiving, by the operating computer, consent or non-consent opinion data on the required reading opinion data, performing statistical processing as collective intelligence data, and deriving the result of pass or reject for each issue required decision issue.

17. The business execution method of claim 16, wherein the collective intelligence data is divided required items consisting of essential factors of business execution and selective items consisting of non-essential factors of business execution so that the cost saved in the non-essential factors can be returned to the investor of the business execution or the purchase contractor of the business execution result; wherein the essential factors are an item that cannot be excluded or reduced in business execution, and the non-essential factors are an item that can be excluded or reduced in business execution.

18. The business execution method of claim 16, wherein the collective intelligence data includes distribution ratio data of business profits to provide to those who provided essential items among essential factors of cost.

19. The business execution method of claim 16, wherein the collective intelligence data includes distribution ratio data of business profits to provide to those who contribute to the required reading opinion data related to decision making.

20. The business execution method of claim 16, wherein the collective intelligence data includes distribution ratio data of business profits to provide to investors who purchase the results of business execution.
